# EUROPEAN PATENT SPECIFICATION

(11) **EP 2 625 412 B1**
(45) Date of publication and mention of the grant of the patent: **04.07.2018**
(21) Application number: 10858232.1
(22) Date of filing: 06.10.2010
(51) Int. Cl.: F02G 5/02, F01N 5/02, F01N 3/20, F02B 37/18

(54) **WASTE HEAT RECOVERY DEVICE BYPASS ARRANGEMENT**
BYPASSANORDNUNG FÜR EINE ABWÄRMERÜCKGEWINNUNGSVORRICHTUNG
AGENCEMENT DE DÉRIVATION DE DISPOSITIF DE RÉCUPÉRATION DE CHALEUR PERDUE

(43) Date of publication of application: 14.08.2013
(73) Proprietor: Mack Trucks, Inc., Greensboro, NC 27409 (US)
(72) Inventor: HORNE, Thomas, A., Waynesboro PA 17268 (US); SPONSKY, John, Chambersburg PA 17202 (US)
(74) Representative: Volvo Technology Corporation
(86) International application number: PCT/US2010/051551
(87) International publication number: WO 2012/047209

(56) References cited:
- EP-A2- 1 475 532
- WO-A1-2010/112961
- DE-A1- 3 439 998
- DE-A1- 3 439 998
- FR-A1- 2 257 064
- FR-A1- 2 885 169
- FR-A1- 2 920 834
- JP-A- 2 146 214
- US-A- 5 133 298
- US-A- 6 155 042
- US-A- 6 155 042
- US-A1- 2002 083 700
- US-A1- 2002 121 084
- US-A1- 2005 188 682
- US-A1- 2005 268 598

## Description

### BACKGROUND AND SUMMARY

The present invention relates to bypass arrangements and, more particularly, to bypass arrangements for bypassing waste heat recovery devices downstream of engines.

A major challenge in developing waste heat recovery systems for heavy and medium duty truck markets is in addressing the need for heat to be supplied to exhaust after treatment systems. For example, catalyst technologies used in these after treatments systems require heat to operate correctly and to regenerate. Waste heat recovery systems remove heat from the exhaust that would have otherwise flowed to the catalyst systems. Often it is necessary to dump heat to the catalyst system, rather than recover it, such as during regeneration, when the catalyst must function at low engine load, or during cold engine operating conditions.

U. S . Patent Application Publication US2005/0188682 to Fledersbacher discloses bypassing a variable geometry turbine when accelerated heating of a cleaning device in an exhaust gas train is desired. The inventors have recognized a disadvantage to such an arrangement in that bypassing the turbine impacts combustion in the engine. The inventors have further recognized the advantages of being able to avoid impacting combustion when it is desired to provide additional heat to a component in an exhaust gas line. EP1 475 532 discloses a thermoelectric generating device which has a thermoelectric element which utilises an exhaust gas from an engine as a high temperature heat source and an engine coolant as a low temperature heat source in order to generate electricity. A controller controls an opening degree of an introducing valve to the thermoelectric element according to a load of the engine. FR 2 885 169 discloses a system for recovering thermal energy using a Rankin cycle. US 2005/0268598 A1 discloses a waste heat discovery device in a first conduit downstream of an internal combustion engine and a second conduit bypassing the waste heat discovery device.

According to the present invention, a waste heat recovery device bypass arrangement comprises a conduit having a first end and a second end adapted to connect upstream and downstream, respectively, of a waste heat recovery device, a valve in the conduit, the valve being controllable to open and close, and a controller arranged to control the valve to open in response to a first signal and close in response to a second signal.

According to the present invention, a diesel engine arrangement comprises a diesel engine, a waste heat recovery device in a first conduit connected to the engine and arranged to receive exhaust gas from the engine, and a waste heat recovery device bypass arrangement, comprising a second conduit having a first end and a second end connected to the first conduit upstream and downstream, respectively, of the waste heat recovery device, a valve in the second conduit, the valve being controllable to open and close, and a controller arranged to control the valve to open in response to a first signal and close in response to a second signal. According to the invention, the diesel engine arrangement comprises a turbine of a turbocharger disposed upstream of the waste heat recovery device wherein the first end of the second conduit is connected to the first conduit upstream of the turbine.

According to yet another aspect of the present invention, a method for bypassing a waste heat recovery device comprises sensing a temperature of gas in a first conduit in which the waste heat recovery device is disposed, and, if the sensed temperature is below a first temperature, bypassing the waste heat recovery device. According to the invention, the method bypasses the waste heat recovery device and a turbine of a turbocharger upstream of the waste heat recovery device.

### BRIEF DESCRIPTION OF THE DRAWINGS

The features and advantages of the present invention are well understood by reading the following detailed description in conjunction with the drawings in which like numerals indicate similar elements and in which:
FIG. 1 is a schematic view of a diesel engine arrangement including a waste heat recovery device bypass arrangement, not part of the present invention;
FIG. 2 is a schematic view of a diesel engine arrangement including a waste heat recovery device bypass arrangement according to the present invention; and
FIG. 3 is a schematic view of a diesel engine arrangement including a waste heat recovery device bypass arrangement, not part of the present invention.

### DETAILED DESCRIPTION

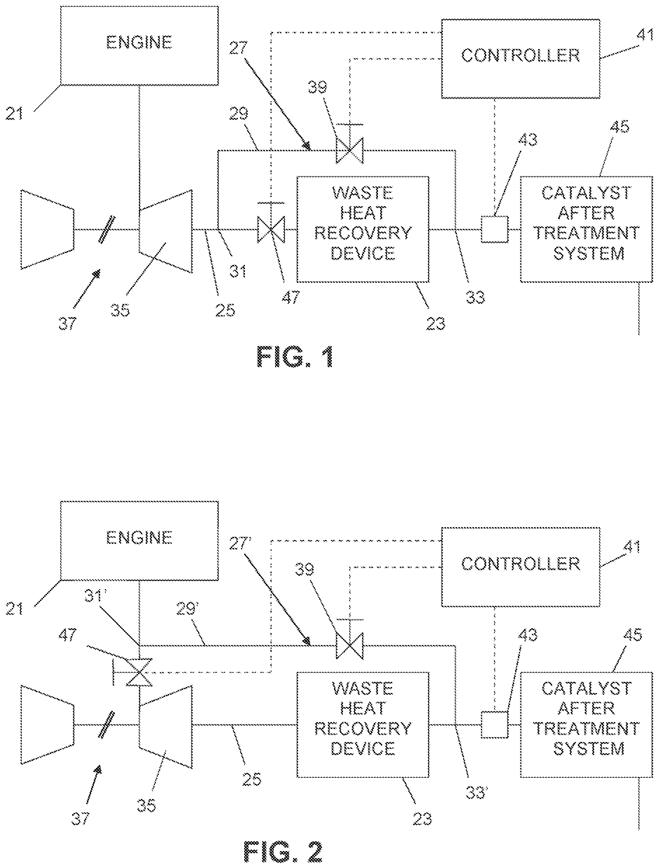

Fig. 2 shows an embodiment of a diesel engine arrangement according to the invention. The diesel engine arrangement comprises a diesel engine 21, a waste heat recovery device 23 in a first conduit 25 connected to the engine and arranged to receive exhaust gas from the engine, and a waste heat recovery device bypass arrangement A "waste heat recovery device" is defined herein as a device other than a turbocharger that recoups thermal energy from engine exhaust such as part of a Rankine cycle device, a Peltier thermoelectric device, molten salt storage, and the like.

The waste heat recovery device bypass arrangement 27 shown in FIG. 1, not part of the invention, comprises a second conduit 29 having a first end 31 and a second end 33 connected to the first conduit 25 upstream and downstream, respectively, of the waste heat recovery device 23. The waste heat recovery device bypass arrangement 27' shown in FIG. 2, according to the invention, also comprises a second conduit 29' having a first end 31' and a second end 33' connected to the first conduit 25 upstream and downstream, respectively, of the waste heat recovery device 23. The first end 31 of the second conduit 29 shown in FIG. 1 is connected downstream of a turbine 35 of a turbocharger 37, while the first end 31' of the second conduit 29' shown in FIG. 2 is connected upstream of the turbine of the turbocharger.

In the FIGS. 1 and 2, the waste heat recovery device bypass arrangement 27 further comprises a valve 39 in the second conduit 29 The valve 39 is controllable by a controller 41, such as a computer, a microprocessor, or the like, to open and close. The controller 41 is arranged to control the valve 39 to open in response to a first signal and close in response to a second signal.

In the FIGS. 1, and 2, the first conduit 25 is an engine exhaust line. The waste heat recovery devices can be devices whose performance, unlike the performance of the turbine of a turbocharger, has no or substantially no impact on combustion in the engine. This is particularly true of the waste heat recovery device 23 in the exhaust line 25 as shown in FIGS. 1 and 2.

The first signal may be a signal from a sensor such as temperature sensor 43 associated with a device 45 downstream from the waste heat recovery device 23, such as a catalyst after treatment system, although the valve 39 may be controlled to open in response to signals relating to substantially anything of interest, such as a characteristic of the exhaust or the occurrence of an event such as the passage of time. For purposes of discussion here, however, the sensor will be a temperature sensor 43. The temperature sensor 43 may be disposed in the first conduit 25 upstream or downstream of the device 45, or in the device 45 When it is desired to operate or regenerate the catalyst after treatment system 45, if the temperature sensor 43 sends a signal that the temperature is too low for proper operation or regeneration, the controller 41 can control the valve 39 to open to bypass the waste heat recovery device 23 so that temperature downstream of the waste heat recovery device will increase. Like the first signal, the second signal may be a signal relating to anything of interest, such as a signal from the temperature sensor 43 that a desired temperature for operation or regeneration of the catalyst after treatment system 45 has been reached, or a signal from a timer (not shown) that may be part of the controller reflecting the passage of a predetermined amount of time When used in conjunction with a device 45 such as a catalyst after treatment system in an exhaust line, the temperature sensor is ordinarily downstream of the waste heat recovery device 23 and, more particularly, downstream of the point where the second end 33 of the second conduit 29 meets the first conduit 25

A second valve 47 adapted to restrict fluid flow through the waste heat recovery device 23 and controlled by the controller 41 to open in response to a third signal and close in response to a fourth signal can also be provided In FIGS 1, and 2, the second valve 47 is illustrated as being disposed in the first conduit 25 upstream of the waste heat recovery device 23 and downstream of the point where the first end 31 of the second conduit meets the first conduit. however, the second valve may be located in or downstream of the waste heat recovery device The second valve 47 can close when the valve 39 opens, to facilitate fluid flow through the bypass arrangement 27, as opposed to through the waste heat recovery device 23 In FIG. 1, the second valve 47 is disposed downstream of the turbine 35 while, in FIG. 2, the second valve 47 is disposed upstream of the turbine 35

The fourth signal to close the second valve 47 may be the same signal as the first signal that opens the valve 39, or some other signal, such as a signal from another temperature sensor remote from the temperature sensor 43 The third signal to open the second valve 47 may be the same signal as the second signal that closes the valve 39, or some other signal The valve 39 and the second valve 47 may both be controllable to open and close to varying degrees, depending upon an amount of bypass desired For example, the valves may be controlled to permit some flow through each of the bypass arrangement 27 and the waste heat recovery device 23.

If the second valve is omitted, it may be desirable to configure the bypass arrangement 27 in a manner to ensure that there is fluid flow through the bypass arrangement, such as by providing less resistance to flow through the bypass arrangement when the valve 39 is open than normally occurs through the waste heat recovery device.

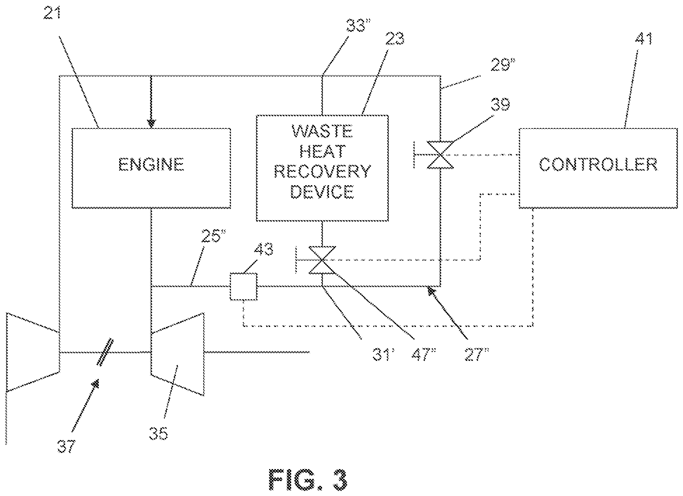

FIG. 3 shows a diesel engine arrangement not, part of the invention, wherein the first conduit 25" is an exhaust gas recirculation (EGR) line The waste heat recovery device 23 is disposed in the first conduit 25". A waste heat recovery device bypass arrangement 27" comprises a second conduit 29" having a first end 31" connected to the first conduit 25" upstream of the waste heat recovery device and a second end 33" connected to the first conduit downstream of the waste heat recovery device. A valve 39" is provided in the second conduit 29". The valve 39" is controllable by a controller 41 to open and close. The controller 41 is arranged to control the valve 39" to open in response to a first signal, such as that temperature the EGR stream is below a desired minimum temperature, and close in response to a second signal, such as that temperature in the EGR stream is at a desired temperature or above a desired maximum temperature.

A second valve 47" adapted to restrict fluid flow through the waste heat recovery device 23 and controlled by the controller 41 to open in response to a third signal and close in response to a fourth signal can also be provided. The third and fourth signals may be the same signals as the second and first signals, respectively, or based on other characteristics or events. The second valve 47" is illustrated as being disposed in the first conduit 25" upstream of the waste heat recovery device 23 and downstream of the point where the first end 31" of the second conduit 29" meets the first conduit, however, the second valve may be located in or downstream of the waste heat recovery device. The second valve 47" can close when the valve 39" opens, to facilitate fluid flow through the bypass arrangement 27", as opposed to through the waste heat recovery device 23.

In a method for bypassing a waste heat recovery device 23 according to an aspect of the present invention, a temperature of gas in a first conduit 25 in which the waste heat recovery device is disposed is sensed. If the sensed temperature is below a first temperature, such as a temperature required for operation or regeneration of a catalyst after treatment device 45, the waste heat recovery device 23 is bypassed. Bypassing of the waste heat recovery device 23 can be terminated after, for example, a predetermined time, such as a time needed for regeneration of the catalyst device 45, or after the sensed temperature is at or above a second temperature. The method also includes bypassing a turbine 35 of a turbocharger 37 upstream of the waste heat recovery device 23 at the same time that the waste heat recovery device 23 is bypassed.

The waste heat recovery device 23 can be bypassed using the bypass arrangement 27 (or 27'") by opening the valve 39 in a second conduit connected at a first end to the first conduit upstream of the waste heat recovery device 23 and connected at a second end to the first conduit downstream of the waste heat recovery device. The waste heat recovery device 23 may also be bypassed by closing a second valve 47 in the first conduit 25 upstream of the waste heat recovery device 23 in conjunction with opening of the valve 39.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A diesel engine arrangement, comprising:
a diesel engine (21);
a waste heat recovery device (23) in a first conduit (25) connected to the engine (21) and arranged to receive exhaust gas from the engine (21), said first conduit (25) being an engine exhaust line; and a waste heat recovery device bypass arrangement, comprising a second conduit (29,29') having a first end (31,31') and a second end (33,33') connected to the first conduit (25) upstream and downstream, respectively, of the waste heat recovery device (23),
a valve (39) in the second conduit (29), the valve (39) being controllable to open and close,
a controller (41) arranged to control the valve to open in response to a first signal and close in response to a second signal,
a temperature sensor (43) in the first conduit (25), downstream from the waste recovery device (23), the temperature sensor (43) providing the first signal when a temperature of a fluid in the first conduit (25) is below a first temperature;
**characterized in that**
said diesel engine arrangement comprises a turbine (35) of a turbocharger (37) disposed upstream of the waste heat recovery device (23), wherein the first end (31') of the second conduit (29') is connected to the first conduit (25) upstream of the turbine (35).

2. The diesel engine arrangement as set forth in claim 1, comprising a second valve (47) adapted to restrict fluid flow through the waste heat recovery device (23) and controlled by the controller (41) to open in response to a third signal and close in response to a fourth signal.

3. The diesel engine arrangement as set forth in claim 2, wherein the second valve (47) is adapted to be disposed upstream of the waste heat recovery device (23) and the turbine (35).

4. A method for bypassing a waste heat recovery device (23) disposed in an engine exhaust line comprising:
sensing a temperature of gas in first conduit (25) in which the waste heat recovery device (23) is disposed; and
if the sensed temperature is below a first temperature, bypassing the waste heat recovery device (23) and a turbine (35) of a turbocharger (37) upstream of the waste heat recovery device (23); and
terminating bypassing of the waste heat recovery device (23) and the turbine (35) of the turbocharger (37) upstream of the waste heat recovery device (23) if the sensed temperature is above a second temperature.

5. The method as set forth in claim 4, comprising terminating bypassing of the waste heat recovery device (23) after a predetermined time.

6. The method as set forth in claim 4, comprising bypassing the waste heat recovery device (23) by opening a valve (39') in a second conduit (29') connected at a first end to the first conduit (25) upstream of the waste heat recovery device (23) and upstream of the turbine (35) and connected at a second end to the first conduit (25) downstream of the waste heat recovery device (23).

7. The method as set forth in claim 6, comprising bypassing the waste heat recovery device (23) by closing a valve (47) in the first conduit (25) upstream of the waste heat recovery device.

## Patentansprüche

1. Dieselmotoranordnung umfassend:
einen Dieselmotor (21);
eine Abwärmerückgewinnungsvorrichtung (23) in einer ersten Leitung (25), die mit dem Motor (21) verbunden ist und so ausgelegt ist, dass sie Abgas von dem Motor (21) erhält, wobei die erste Leitung (25) eine Motorauslassleitung ist; und
eine Abwärmerückgewinnungsvorrichtungs-Umgehungsanordnung, die eine zweite Leitung (29, 29') aufweist, die ein erstes Ende (31, 31') und ein zweites Ende (33, 33') aufweist, die mit der ersten Leitung (25) stromaufwärts bzw. stromabwärts von der Abwärmerückgewinnungsvorrichtung (23) verbunden sind,
ein Ventil (39) in der zweiten Leitung (29), wobei das Ventil (39) derart steuerbar ist, dass es sich öffnet und schließt,
eine Steuereinrichtung (41), die dazu ausgelegt ist, das Ventil derart zu steuern, dass es sich ansprechend auf ein erstes Signal öffnet und ansprechend auf ein zweites Signal schließt,
einen Temperatursensor (43) in der ersten Leitung (25) stromabwärts von der Abwärmerückgewinnungsvorrichtung (23), wobei der Temperatursensor (43) das erste Signal bereitstellt, wenn eine Temperatur eines Fluids in der ersten Leitung (25) unter einer ersten Temperatur liegt;
**dadurch gekennzeichnet, dass**
die Dieselmotoranordnung eine Turbine (35) eines Turboladers (37) aufweist, die stromaufwärts von der Abwärmerückgewinnungsvorrichtung (23) angeordnet ist, wobei das erste Ende (31') der zweiten Leitung (29') stromaufwärts von der Turbine (35) mit der ersten Leitung (25) verbunden ist.

2. Dieselmotoranordnung nach Anspruch 1, die ein zweites Ventil (47) aufweist, das dazu ausgelegt ist, den Fluidstrom durch die Abwärmerückgewinnungsvorrichtung (23) zu begrenzen, und das durch die Steuereinrichtung (41) derart gesteuert wird, dass es sich ansprechend auf ein drittes Signal öffnet und ansprechend auf ein viertes Signal schließt.

3. Dieselmotoranordnung nach Anspruch 2 wobei das zweite Ventil (47) derart ausgelegt ist, dass es stromaufwärts von der Abwärmerückgewinnungsvorrichtung (23) und der Turbine (35) angeordnet ist.

4. Verfahren zum Umgehen einer in einer Motorauslassleitung angeordneten Abwärmerückgewinnungsvorrichtung (23) umfassend:
Erfassen einer Gastemperatur in einer ersten Leitung (25), in der die Abwärmerückgewinnungsvorrichtung (23) angeordnet ist; und
wenn die erfasste Temperatur unter einer ersten Temperatur liegt, Umgehen der Abwärmerückgewinnungsvorrichtung (23) und einer Turbine (35) eines Turboladers (37) stromaufwärts von der Abwärmerückgewinnungsvorrichtung (23); und
Beenden des Umgehens der Abwärmerückgewinnungsvorrichtung (23) und der Turbine (35) des Turboladers (37) stromaufwärts von der Abwärmerückgewinnungsvorrichtung (23), wenn die erfasste Temperatur über einer zweiten Temperatur liegt.

5. Verfahren nach Anspruch 4 umfassend das Beenden des Umgehens der Abwärmerückgewinnungsvorrichtung (23) nach einer vorherbestimmten Zeit.

6. Verfahren nach Anspruch 4 umfassend das Umgehen der Abwärmerückgewinnungsvorrichtung (23) durch Öffnen eines Ventils (39') in einer zweiten Leitung (29'), die an einem ersten Ende mit der ersten Leitung (25) stromaufwärts von der Abwärmerückgewinnungsvorrichtung (23) und stromaufwärts von der Turbine (35) verbunden ist, und an einem zweiten Ende mit der ersten Leitung (25) stromabwärts von der Abwärmerückgewinnungsvorrichtung (23) verbunden ist.

7. Verfahren nach Anspruch 6 umfassend das Umgehen der Abwärmerückgewinnungsvorrichtung (23) durch Schließen eines Ventils (47) in der ersten Leitung (25) stromaufwärts von der Abwärmerückgewinnungsvorrichtung.

## Revendications

1. Agencement de moteur diesel, comprenant :
un moteur diesel (21) ;
un dispositif de récupération de chaleur perdue (23) dans un premier conduit (25) relié au moteur (21) et agencé pour recevoir un gaz d'échappement provenant du moteur (21), ledit premier conduit (25) étant une conduite d'échappement de moteur ; et
un agencement de contournement de dispositif de récupération de chaleur perdue, comprenant un deuxième conduit (29, 29') ayant une première extrémité (31, 31') et une deuxième extrémité (33, 33') reliée au premier conduit (25) en amont et en aval, respectivement, du dispositif de récupération de chaleur perdue (23),
une soupape (39) dans le deuxième conduit (29), la soupape (39) pouvant être commandée pour s'ouvrir et se fermer,
une unité de commande (41) agencée pour commander la soupape pour s'ouvrir en réponse à un premier signal et pour se fermer en réponse à un deuxième signal,
un capteur de température (43) dans le premier conduit (25), en aval du dispositif de récupération de chaleur perdue (23), le capteur de température (43) fournissant le premier signal lorsqu'une température d'un fluide dans le premier conduit (25) est inférieure à une première température ;
**caractérisé en ce que**
ledit agencement de moteur diesel comprend une turbine (35) d'un turbocompresseur (37) disposée en amont du dispositif de récupération de chaleur perdue (23), où la première extrémité (31') du deuxième conduit (29') est reliée au premier conduit (25) en amont de la turbine (35).

2. Agencement de moteur diesel selon la revendication 1, comprenant une deuxième soupape (47) adaptée pour limiter un écoulement de fluide à travers le dispositif de récupération de chaleur perdue (23) et commandée par l'unité de commande (41) pour s'ouvrir en réponse à un troisième signal et se fermer en réponse à un quatrième signal.

3. Agencement de moteur diesel selon la revendication 2, dans lequel la deuxième soupape (47) est adaptée pour être disposée en amont du dispositif de récupération de chaleur perdue (23) et de la turbine (35).

4. Procédé de contournement d'un dispositif de récupération de chaleur perdue (23) disposé dans une conduite d'échappement de moteur, comprenant le fait :
de détecter une température de gaz dans un premier conduit (25) dans lequel le dispositif de récupération de chaleur perdue (23) est disposé ; et
de contourner, si la température détectée est inférieure à une première température, le dispositif de récupération de chaleur perdue (23) et une turbine (35) d'un turbocompresseur (37) en amont du dispositif de récupération de chaleur perdue (23) ; et
de terminer le contournement du dispositif de récupération de chaleur perdue (23) et de la turbine (35) du turbocompresseur (37) en amont du dispositif de récupération de chaleur perdue (23) si la température détectée est supérieure à une deuxième température.

5. Procédé selon la revendication 4, comprenant le fait de terminer le contournement du dispositif de récupération de chaleur perdue (23) après un temps prédéterminé.

6. Procédé selon la revendication 4, comprenant le fait de contourner le dispositif de récupération de chaleur perdue (23) en ouvrant une soupape (39') dans un deuxième conduit (29') relié au niveau d'une première extrémité au premier conduit (25) en amont du dispositif de récupération de chaleur perdue (23) et en amont de la turbine (35) et relié au niveau d'une deuxième extrémité au premier conduit (25) en aval du dispositif de récupération de chaleur perdue (23).

7. Procédé selon la revendication 6, comprenant le fait de contourner le dispositif de récupération de chaleur perdue (23) en fermant une soupape (47) dans le premier conduit (25) en amont du dispositif de récupération de chaleur perdue.
